(19) Europäisches Patentamt
European Patent Office
Office européen des brevets

(11) **EP 4 376 332 A1**

(12) **EUROPEAN PATENT APPLICATION**

(43) Date of publication:
**29.05.2024 Bulletin 2024/22**

(51) International Patent Classification (IPC):
***H04K 1/02*** *(2006.01)*

(21) Application number: **22209986.3**

(22) Date of filing: **28.11.2022**

(52) Cooperative Patent Classification (CPC):
**H04K 1/02; H04L 9/06;** H04L 2209/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Deutsche Telekom AG
53113 Bonn (DE)**
• **Technische Universität München
80333 München (DE)**

(72) Inventors:
• **TORRES FIGUEROA, Luis Angel
80804 München (DE)**

• **MÖNICH, Ullrich
81369 München (DE)**
• **WIESE, Moritz
80807 München (DE)**
• **BOCHE, Holger
10318 Berlin (DE)**
• **HOLSCHKE, Oliver
10969 Berlin (DE)**
• **GEITZ, Marc
58089 Hagen (DE)**

(74) Representative: **Braun-Dullaeus Pannen
Emmerling
Patent- & Rechtsanwaltspartnerschaft mbB
Platz der Ideen 2
40476 Düsseldorf (DE)**

(54) **TECHNIQUES FOR REALIZING SEMANTIC SECURITY IN COMMUNICATIONS SYSTEMS**

(57) The invention disclosed techniques for enhancing a security level of a communication signal, comprising the following steps:
• receiving a message m as input data;
• adding artificial noise of a level $N_{Art}$ according to a function $f^1(m)$ to the message m so that
o after a transmission of the communication signal x over a communication channel T with a noise level $N_T$ to a receiver that transforms the communication signal x to the communication signal y, the message remains readable to the receiver;
o after a transmission of the communication signal x over a communication channel E with a noise level $N_E$ to an eavesdropper that transforms the communication signal x to the communication signal z, the message gets unreadable to the eavesdropper.

Fig. 1

Fig. 2

**EP 4 376 332 A1**

**Description**

The invention relates to technology agnostic techniques for realizing semantic security in communication systems. In particular, the invention relates to security modules, user terminals, a communication system, a throughput unit of the communication system, a method and to a signal for realizing semantic security in Communications Systems. Additionally, the invention can relate to architecture design and protocols for embedding information-theoretic physical layer security into communication systems.

As post-quantum cryptography (PQC) gradually supersedes its classical counterpart, it will play a key role in securing future communications. However, there is still a need of technical solutions in case PQC becomes ever compromised.

For example, a physical mechanism to securely exchange keys between two remote parties is Quantum Key Distribution (QKD). QKD introduces, however, some draw-backs. Namely, it is not necessarily an end-to-end (E2E) solution, it requires the introduction of trusted network nodes due to the distance limitation of the quantum channel, and it requires measures for the initial authentication prior to the QKD process. QKD relies on the security of a symmetric encryption scheme to make use of the distributed encryption keys. QKD requires also a separate hardware installation (dedicated dark fiber and QKD servers at its end points) and must therefore be seen as not scalable and expensive solution.

To understand the following, we briefly explain about noise in electromagnetic signals: In electronics, noise is an unwanted disturbance in an electrical signal. Noise generated by electronic devices varies greatly as it is produced by several different effects. Electronic noise is a common component of noise in signal processing. Noise can also happen to electromagnetic signals while the electromagnetic signals travel over a communication channel, the level of the noise depends on the respective technical characteristics of the communication channel. To make messages readable for receivers, error correction due to noise, like FEC (Forward error correction) that is known to the person skilled in the art can be applied.

Forward error correction (FEC) is a process of adding redundant data such as an error-correcting code (ECC) to a message so that it can be recovered by a receiver even when no more than a certain number of errors (up to the capability of the code being used) are introduced, either during the process of transmission or on storage. Since the receiver does not have to ask the sender for retransmission of the data, a backchannel is not required in forward error correction. Typically, error-correcting codes are used in lower-layer communication such as cellular network, high-speed fiber-optic communication and Wi-Fi, as well as for reliable storage in media such as flash memory, hard disk and RAM.

In information theory, the technical and/or mathematical treatment of eavesdropping scenario can be done using the wiretap channel as described in "A. D. Wyner, "The wire-tap channel," The Bell System Technical Journal, vol. 54, no. 8, pp. 1355-1387, Oct. 1975". In this model, two legitimate partners are represented by "Alice" and "Bob", who communicate over a noisy channel $T$ with a noise level $N_T$, while the eavesdropper "Eve" intercepts the transmissions through a different noisier channel E, with a noise level $N_E$ that is larger than the noise level $N_T$.

Alice's aim here is to fulfill two main goals. First, to ensure reliability in the communication to Bob by decreasing the likelihood of the channel corrupting the transmitted information, thus keeping the probability of decoding error at Bob low. And second, to enforce secrecy by constraining the information leakage to potential eavesdroppers, aiming to keep the statistical correlation between the transmitted message m and the channel output at Eve z as low as possible.

Current solutions assure reliability and secrecy jointly as described in "M. Bloch, M. Hayashi, and A. Thangaraj, "Error-Control Coding for Physical-Layer Secrecy," Proceedings of the IEEE, vol. 103, no. 10, pp. 1725-1746, Oct. 2015", which only provides a rigid and non-flexible solutions that is hard to implement into existing communication infrastructure.

Although wiretap code constructions have been reported in the literature, most of them do not fulfill the requirements set by a security metric as strong as information theoretic semantic security.

If a communication scheme satisfies information-theoretic semantic security, then the eavesdropper can apply any operation to the observations made on its channel output and still will only obtain negligible information about the transmitted message. These operations are not bound to being implementable on any type of computer, let alone of being computable in finite time. In contrast to this, cryptographic semantic security only considers eavesdroppers who are computationally bounded, i.e., the operations which they can perform are limited to being implementable on a computer and to produce an output in reasonable (polynomial) time.

Approaches that achieve weaker notions of security do not ensure a compliance with a future-proof security metric, thereby making them unsuitable for post-quantum scenarios. No system architecture designs that embed provable semantic security have been found in the state of the art.

In addition, there is a lack of flexible secure architecture that employs existing FECs, and offers a scalable and trustworthy solution that is future-proof. On the contrary, existing approaches for ensuring IT-PLS (information theoretic physical security) involve a redesign of the physical layer of the protocol stack. The code design proposed in US 8 667 380 B2 is one such example, where security and robustness in the communication in terms of error correction codes are jointly designed. The main disadvantage of such approaches is that they do not allow the integration with current standardized technologies, making their integration with widely-deployed systems prohibitive since it demands major architectural changes in well-established technologies.

In addition, existing security implementations are bound to a distinct channel medium, which requires a redesign of the security mechanisms when operating under different channel conditions.

It is therefore the task of the invention to provide techniques which at least partially eliminate the disadvantages of the prior art and to provide flexible techniques to enhance security of telecommunication systems.

This object is solved by the features of the independent claims.

The features of the various aspects of the invention described below or the various examples of implementation may be combined with each other, unless this is explicitly excluded or is technically impossible.

According to a first aspect of the invention, a security module SMs of a sending unit for enhancing a security level of a communication signal is provided, wherein the security module $SM_s$ is configured to receive a message $m$ as input data and configured to transform it to a communication signal x comprising the message m, wherein the security module SMs comprises:

- an artificial-noise-generating component configured to add artificial noise of a level $N_{Art}$ according to a function $f^1(m)$ to the message m so that

  ○ after a transmission of the communication signal x over a communication channel T with a noise level $N_T$ to a receiver that transforms the communication signal x to the communication signal y, the message remains readable to the receiver;

    ▪ the communication signal x has been transformed to the signal y because of the of the noise $N_T$ of the communication channel. Within the context of this invention, we also refer to a communication path, wherein communication path and communication channel are technically identical. A communication channel can be realized as a wireless communication channel (e.g. cellular channel like 3G, 4G, 5G, 6G or W-LAN) or a fixed line channel (e.g. xDSL, etc.). It is also possible that the communication channel is a mix of a wireless communication terminal and fixed line channel. The type of all the properties of the respective communication channel determines its noise level **N.** In general, a fixed line communication channel has less noise than a wireless line communication channel and a communication channel with the shorter distance has less noise than a communication channel with longer distance.

    ▪ the receiver of y can apply $f(y)$, which is the inverse function of $f^1(m)$, in order to make the message m readable again. In the following, $f(y)$ and $f^1(m)$ are referred to security functions or artificial-noise-generating functions; to distinguish that the receiver gained m from $f(y)$ it can also be specified as $\hat{m}$.

    ▪ in an embodiment, the artificial-noise-generating component can be realized as a IT-PLS component - in this case, the functions $f(y)$ and $f^1(m)$ can also be described as IT-PLS functions;

    ▪ in general, all the functions described in the invention can be implemented as a computer program on a processor of the various security modules described or on a processor of a sending unit, receiving unit or a sever comprising a security module;

  ○ after a transmission of the communication signal x over a communication channel E with a noise level $N_E$ larger than $N_T$ to an eavesdropper that transforms the communication signal x to the communication signal z, the message gets unreadable to the eavesdropper;

    ▪ in particular, the artificial noise is only known to the artificial-noise-generating component and can be generated in a randomized fashion; the artificial noise can insert bits of useless information into the message m. Due to the noisier channel $N_E$, this results in so many bit errors to the communication signal z so that any bit error correction method of a receiving terminal of the eavesdropper would result in so many possible "original" messages that it is in principle not possible that the eavesdropper gains any information about the true message m. When perfect semantic security holds, every one of the possible "original" messages has the same likelihood being the original message m;

      - this can be illustrated by the following example: an error correction scheme shall be able to correct one bit out of a 3 bit message: The message is only the following 1 bit message: "1", but 2 more bits of artificial noise are added by $f^1$ that yields: "001"
      - Bob's channel has the noise rate $N_T$ that only causes 1 bit error. A possible message Bob receives is "101". Since the error correction scheme can correct one bit, Bob corrects "101" to "001" and then applies f to get the true message "1";

- Eve's channel has the noise rate $N_E$ that can cause 3 bit error. A possible message Eve receives is "110". Since the error correction scheme can only correct one bit, Eve gets many possible "original" messages. For example, if the first bit was successfully corrected, then Eve gets the following possible "original" messages: 1) "000", 2) "001", 3)"010", and 4) "001". However, Eve has no information, which of the 4 results is the right one. Even this illustrative schema, that does not cover the whole complexity of $N_{Art}$, shows how fast it gets impossible for Eve to gain the true original message m;
- $N_{Art}$ is configured in such a way that is impossible to reconstruct the message m from the communication signal z;

  ▪ the communication signal z is different from y because the communication channels T and E have different noise levels. The value of $N_{Art}$ is set so that even if the eavesdropper applies $f(z)$, he cannot obtain a readable version of m but something else that does, in the ideal case, not reveal any information of m. The artificial noise level $N_{Art}$ degenerates in combination with the noise level $N_E$ the communication signal so much that $f(z) = m$ does not work. The eavesdroppers, against whom the invention secures a message transmission, are allowed to do everything, i.e. also to apply transformations, which are not to be implemented on a computer at all without being able to obtain the original message.

The sending unit and/or the receiving entity can be in principle any technical unit that creates messages and sends communication signals, for example a server, a smart phone, tablet, a computer, an IoT-device, and etc.

The security module $SM_S$ can comprise a first interface $I_{SMS,1}$ configured to receive the message m as input data and a second interface $I_{SMS,2}$ configured to send a signal that shows the added artificial noise of the level $N_{Art}$.

The invention, in particular $SM_S$, provides the advantage that the message m is being transmitted in a secure way, in particular in an semantic secure way, from a sender to receiver in a way that an eavesdropper is not able to obtain the original message M even if he knows any of the functions $f(y)$ or $f^{-1}(m)$.

The invention provides as a further advantage that the security module SMs can be implemented alone and/or in addition to existing encryption methods. In contrast to existing encryption methods, the proposed solution has only minimal computational overhead, which has also the result that it is applicable in real time communication systems because it only has a minimal effect on latency. In addition, it reduces data traffic, because in contrast to encryption methods no key needs to be shared between a receiving entity and a sending entity to decrypt the message - the receiver only needs to know function $f$, which can be implemented into the receiver entity and is used many times.

This provides the further advantage that the solution is technology-agnostic and can be implemented basically in any architecture that uses communication signals, wherein the communication signals can travel over the channels with different noise levels.

The solution, in particular the security module SMs, can be implemented in a modular way into existing systems, in particular into existing sending units. This provides the advantage that existing communication terminals, i.e. sending units and/or receiving units, can easily be updated to provide additional security. The modular approach also enables easy implementation into new systems. It is also possible to implement the security module SMs into the OSI layer architecture in a way that it does not effect other already existing functionalities of the different OSI layers. Furthermore, as such, to the best of our knowledge no architecture design has been proposed in the state of the art that embeds IT-PLS in a modular manner into the system design, so that it is backward compatible with legacy, existing and future technologies, while performing a clear demarcation between robustness and security design.

IT-PLS can be seen as an add-on to other security features, e.g. QKD, but in fact it represents a better solution to the problem of securing digital communications in a post quantum era. IT-PLS does not require new hardware or fiber lines, is network and technology agnostic, embeds directly into a variety of existing communication infrastructures, and does not rely on other technology (i.e., symmetric encryption or such) to deliver semantic security.

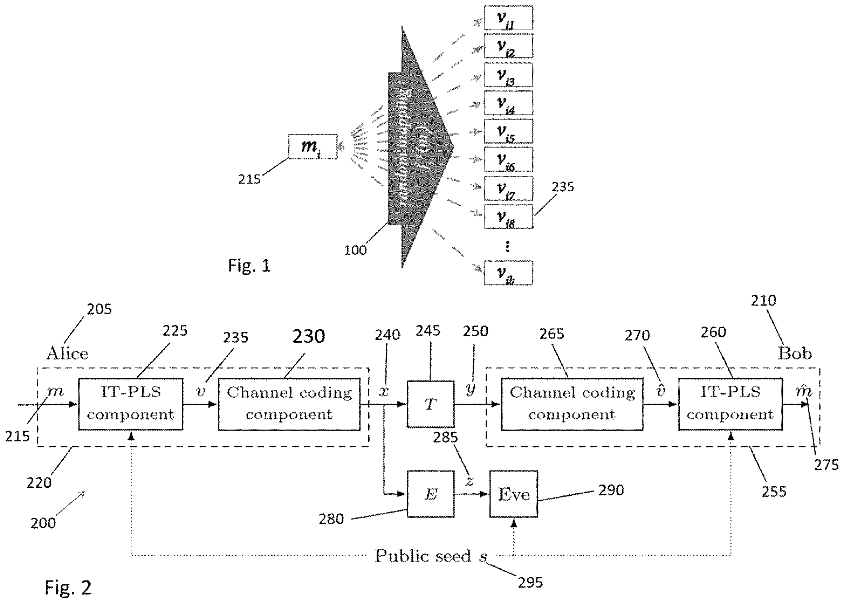

In an embodiment, the security module SMs comprises a channel coding component, wherein the channel coding component is configured to protect the message m, in particular v (see Fig. 2), against errors of the communication signal $\times$ that occur during transmission over the communication channel T with a noise level $N_T$.

The channel coding component can comprise a forward error correction (FEC) functionality known to the person skilled in the art. Combining a known channel code component technique with the artificial-noise-generating component provides the advantage that existing FEC solutions can be used in order to "guard" the message with the added artificial noise so that the receiver is capable of obtaining the message m. Without the channel coding component, $f(y) = m$ would only work in cases, wherein the noise level $N_T$ is very low, whereas the added artificial noise makes the reconstruction of m for the eavesdropper even harder.

In an embodiment, the artificial-noise-generating component and the channel coding component are independent from each other. In particular, the artificial-noise-generating component and the channel coding component can technically be arranged in a modular scheme. The artificial-noise-generating component is "responsible" for inserting artificial noise $N_{Art}$ into the message m.

This provides the advantage, that the selection of a specific FEC code for the channel coding component is not restricted and does not depend on the specific implementation of the artificial-noise-generating component, therefore existing well-investigated FEC codes as well as novel ones can be employed for ensuring robustness. Similarly, existing and novel modulation schemes and other aforementioned physical layer procedures that also contribute to the robustness of the system remain unaltered due to the fact that the channel coding component and the artificial-noise-generating component are independent from each other.

One of the main advantages of the present invention lies in the re-usability of existing and widely investigated error correction codes in the proposed future-proof architecture, thus not requiring the re-design of the physical layer. Furthermore, by using such a modular scheme, the integration of the security function is flexible and can be realized either in the physical or in the data link layer of the OSI model as will be explained in the following. The fact that the artificial-noise-generating component and the channel coding component are independent from each other and therefore provide a modular scheme that has a very high level of flexibility allows to upgrade existing and legacy systems to offer information-theoretic security assurances via a simple over-the-air software or firmware update. In particular, the design of additional processing blocks responsible for the IT-PLS encoder and the IT-PLS decoder is flexible and can be implemented using various algorithms.

In an embodiment, the security module SMs is implemented within the data layer or the physical layer of the OSI protocol stack, in particular wherein the artificial-noise-generating component and the channel coding component are implemented in the same layer or in different layers.

This flexibility provides the advantage that the implementation can be tailored to already existing solutions and can be optimized in view of if the performance outcome is better if that security module SMs is being implemented in the data layer or the physical layer. Is even possible that the channel coding component is already implemented and that the artificial-noise-generating component can be implemented in the same or in a different layer. This flexibility further allows to optimize the implementation in new upcoming technologies (in case of physical layer), while remaining flexible for upgrading legacy and existing communication systems via software or firmware updates (in the case of the data layer). And implementation in a data layer also provides the advantage that the solution can be realized by a virtual security module SMs that provides pure software solution, in particular such virtual security modules SMs can be used as functionality within a 5G communication network.

In an embodiment, the artificial-noise-generating component is arranged in front of the channel coding component in an outgoing data stream direction.

This provides the advantage that the channel coding component can efficiently protect the signal v that is created by adding artificial noise to the message m in order that the message m can be obtained by the receiving unit. In other words, only if the channel coding component is being arranged behind the artificial-noise-generating component in an outgoing data stream stream direction it can insert redundant bits in the signal that comprises the message m plus the artificial noise of the level $N_{Art}$. Overall this provides the advantage of increasing the robustness of the signal.

In an embodiment, $N_{Art}$ is adjustable and/or the functions $f(y)$ or $f^1(m)$ are adjustable. In particular the artificial-noise-generating component is configured to receive $N_{Art}$ values and/or the $f(y)$ as input and to implemented accordingly in a dedicated procedure. $N_{Art}$ can be adjustable due to specific service requirements, specific application requirements and/or communication channel properties.

The functions $f(y)$ or $f^1(m)$, which can in particular be IT-PLS functions, can be provided in a library and selected based on specific security and/or performance requirements. This provides the advantage that functions can be tailored optimally to a specific use case. The choice of a certain security functions $f(y)$ or $f^1(m)$ that can be implemented is advantageously not restricted to the explicit code constructions for the security component of the wiretap code scheme presented in this document. Since those different functions can have different features and offer different levels of overhead, they can be flexibly deployed depending on the latency, overhead, energy consumption restrictions and other constraints in a given scenario.

The flexibility in the level of the noise $N_{Art}$ provides the advantage that $N_{Art}$ can be tailored to the properties of the respective communication path E to provide an optimized outcome with respect to robustness and security of the communication signal x. The channel coding component adapts itself in order that the bit errors introduced by the channel T can be corrected by Bob's channel coding component, which is in particular a FEC. In general, the noise $N_{Art}$ is only being optimized with respect to knowledge and/or assumption about path E so that it gets unreadable for Eve. The security module SMs can be configured to determine properties of the communication paths T and/or E.

Information about communication channel T can be used to adjust the channel coding component and information about communication channel E can be used to adjust $N_{Art}$ with respect to semantic security. This can be done by estimating a noise level if distinct knowledge about the physical properties of the communication path T and/or E is being provided. For example, if it is known that the communication signal $\times$ travels at first 3 km via the fixed DSL connection and then 300 m via a 5G cellular network to the receiving entity. Another possibility is that the sending entity and the receiving entity exchange well-defined test messages, wherein the security module SMs can determine the noise level from those test messages. In general, the more the test messages are degraded, the higher is the noise level $N_T$ of the communication path T. The lower the noise level $N_E$ of the communication path E, the higher shall the artificial noise level $N_{Art}$ be set.

The possibility to adjust level of the noise $N_{Art}$ and the functions simultaneously in combination can provide a synergetic effect regarding the optimized outcome with respect to robustness and security of the communication signal x.

The flexibility of adjusting different levels of noise $N_{Art}$ and/or choosing different security functions f also provides the advantage that they can be chosen with respect to certain requirements of services and/or applications that create the message m. For example, a service or an application that is related to a banking transfer has in general higher security demands than non-confidential message service.

In an embodiment, an appropriate seed S is used within the function $f_S^{-1}(m,S)$ to create a different kind of artificial noise $N_{Art}$, in particular to randomize $N_{Art}$. The artificial noise $N_{Art}$. Can be different because of the randomized "nature" of S. In this case, the receiving entity uses the security function $f_S(y,S)$ to obtain the message m, wherein throughout this text y comprises m. The seed S can be a public seed S and/or can be a re-usable seed S.

The seed S needed in this embodiment has a bit sequence or any other information means that is generated randomly and exchanged between communication parties before the receiving entity applies $f_S(y,S)$. In contrast to a private key used in cryptography, the seed used by the proposed architecture is not secret and the eavesdropper is allowed to have knowledge of the currently employed seed. Having full knowledge of the employed public seed, nonetheless, does not provide the eavesdropper with any advantage to crack the communication because sematic security is being provided. Not using cryptography reduces computational overhead and leads to lower latency times, which is especially beneficial for real-time systems.

Despite the public nature of the seed, the eavesdropper is still unable to reconstruct the originally transmitted message thanks to the guaranteed semantic security in the communication realized by the artificial-noise-generating component. The seeded approach enforces trust-worthiness in the communication by achieving semantic security for varying channel scenarios. This is accomplished thanks to an architecture design that offers an adaptable security rate that can be dynamically adjusted according to different channel conditions by employing different realizations of information-theoretic physical layer security (IT-PLS) encoders and their corresponding decoders. The adaptable rate of the IT-PLS component makes it suitable for integration into any communication architecture.

The overall rate of the security module involving the two components determines the *security rate* of the system. Realizations of such a wiretap code achieve semantic security in dynamic scenarios thanks to a seeded approach that allows to adapt the system to different channel conditions and still ensure semantic security in the communication against eavesdropping attacks.

Further, the integration of the seeded approach into existing and future communication systems is carried out non-intrusively either at the data link layer or at the physical layer. That is, thanks to its modular design, our seeded architecture leaves the error-correction coding layer and other procedures responsible for the robustness of the system intact, thus not impacting the performance offered by well-researched and widely-deployed channel codes and other standard procedures. Examples of the latter include scrambling, interleaving, frequency hopping, modulation schemes, beamforming, among others. Such smooth integration has the potential of making both current systems and future technologies resilient against post-quantum eavesdropping attacks without requiring a re-design of their lower layers. Overall, this makes our approach backward compatible with existing technologies, e.g., via software updates. Additionally, the added security functionality does not introduce significant latency overhead.

The reusability of the seed S decreases the overhead introduced by the seed. The overhead introduced by the required seed is negligible, since the seed can be recycled or reused for multiple transmissions and communicated during idle periods, e.g., outside of the peak traffic hours or overnight.

In an embodiment, the security module SMs comprises a feedback loop that is configured to adjust the seed S dynamically during communication. For example, if knowledge is obtained that the noise of communication channel $N_E$ has decreased. In such a case, the security module SMs can increase the level of the artificial noise $N_{Art}$ in a dynamic way, in particularly stepwise by giving pattern so that sematic security can be maintained.

This provides the advantage that even an artificial noise level $N_{Art}$ that was set too high at the beginning of the communication is being recused so that the communication can proceed successfully. It is a further advantage, that the feedback loop can also take dynamic changes of the noise level $N_T$ of the communication path T into account. Those changes can occur due to many reasons, for example if the receiving entity is being moved from one location to another location.

According to a second aspect of the invention, a security module $SM_R$ of a receiving unit for receiving a communication signal y (wherein y comprises message m) and to extract the message m from the signal y is being provided, wherein the security module $SM_R$ comprises

- a first interface $I_{SMR,1}$ in connection with the communication path T with the noise level $N_T$ and being configured to receive the communication signal y as input data;

> ◦ being connected to the communication path T with the noise level $N_T$ ensures that the security module $SM_R$ is being provided at the location of the legitimate receiver, also called as Bob;

- an artificial-noise-removing component configured to remove artificial noise of a level $N_{Art}$ caused by a function $f^1(m)$ by applying a function $f(y)$ and to extract the message m.

This provides the advantage that the security module $SM_R$ is capable of obtaining the original message m even if the message m was modified by artificial additional noise.

All the other features described above within the context of the security module SMs that are not in technical contradiction with the functionality of the security module $SM_R$ can also be applied to the security module $SM_R$. In particular, if the seed approach is being used, the artificial-noise-removing component applies $f_S(y,S)$ to extract the original message m from the communication signal y.

The security module $SM_R$ can also comprise a channel de-coding component, that corresponds to the channel decoding complement of the receiving unit, that is configured to correct bit-errors, in particular by applying FEC means, of a communication signal x that was transformed to the communication signal y by traveling over a communication path T. The channel de-coding component ensures that the communication signal y is being corrected from bit-errors to become the communication signal $\hat{v}$, which serves than as the input for the functions $f_S(\hat{v},S)$ or $f(\hat{v})$ to obtain the original message m. Therefore, it is beneficial if the channel de-coding component is being arranged in front of the artificial-noise-removing component in a data stream in-going direction.

According to a third aspect of the invention, a communication terminal is being provided that comprises the security module SMs described above and/or the security module $SM_R$ described above.

This provides the advantage that the communication terminal is being able to be used in a semantic secure communication, wherein the communication terminal can be the sending entity and/or the receiving entity.

According to a fourth aspect of the invention, a security module $SM_{CN}$ of a communication network for enhancing a security level of a communication signal, in particular between a sender entity and a receiving entity, is being provided, wherein the security module $SM_{CN}$ comprises

- a first interface $I_{SMCN,1}$ configured to receive a message m from a sending unit of a secure communication channel SEC and a second interface ISMCN,2 configured to send a communication signal x comprising the message m over an unsecure communication path T to a receiving unit,

> ◦ the secure communication channel SEC can be a fixed line Intranet solution that is basically perfectly secure, but it can also be sufficient if the communication channel SEC provides very high level of security compared to other communication channels like 5G solutions;
> ◦ the sending unit and/or the receiving unit within the context of the fourth aspect of the invention need not to have a semantic security functionality as described within the context of the first, second and third aspect invention;

> > ▪ the secure communication channel SEC can receive communication signals m from multiple sending units and/or the unsecure a communication path T can send the communication signal x to multiple receiving units;

- an artificial-noise-generating component configured to add artificial noise of a level $N_{Art}$ according to a function $f^1(m)$ to the message m so that

> ◦ after a transmission of the communication signal x over a communication channel T with a noise level $N_T$ to a receiver that transforms the communication signal x to the communication signal y, the message remains readable to the receiver;
> ◦ after a transmission of the communication signal x over a communication channel E with a noise level $N_E$ larger than $N_T$ to an eavesdropper that transforms the communication signal x to the communication signal z, the message gets unreadable to the eavesdropper;

> > ▪ in the technical sense, the artificial-noise-generating component of the security module $SM_{CN}$ functions as the artificial-noise-generating component of the security module SMs.

This provides the advantage that if the security module $SM_{CN}$ is being implemented within the communication network, in particular within a throughput unit (like a server) within the communication network, even legacy communication terminals without functionality of semantic security can communicate semantic secure over communication networks. If this legacy terminal sends its message over the secure communication channel SEC, e.g. a fixed line intranet, to the security module $SM_{CN}$ within the communication network there is no or at least a low chance that an eavesdropper has access to the message m. The security module $SM_{CN}$ then provides semantic security as described within the context of the first aspect of the invention before sending it over the communication channel T to the receiving unit. Hence, if an eavesdropper has access over his communication channel E with the noise level $N_E$ the message m is a semantically secure hidden within the communication signal z.

This also provides very efficient means of realizing semantic security within communication systems because a single security module $SM_{CN}$ within the communication network can provide semantic security for many user terminals.

All the other features described above within the context of the security module SMs that are not in technical contradiction with the functionality of the security module $SM_{CN}$ can also be applied to the security module $SM_R$. In particular, if the seed approach is being used, the artificial-noise-removing component applies $f_S(y,S)$ to extract the original message m from the communication signal y.

In an embodiment, the security module $SM_{CN}$ also comprises a channel coding component as described above within the context of the security module SMs, wherein the channel coding component is configured to protect the message m against errors of the communication signal x that occur during transmission over the communication channel T with a noise level $N_T$.

This provides the same features as described above.

The security module $SM_{CN}$ can be implemented on a throughput unit, for example on a server provided by a telecommunication provider, within the communication network, wherein the throughput unit is in particular implemented at the border of the secure communication network.

This provides the advantage, that there is no additional addressing necessary to route the communication signal x to the security module $SM_{CN}$ as the data traffic goes anyway through the throughput unit, it can in particular be located at a central position within the communication network.

The security module $SM_{CN}$ can be implemented in XDSL, 5G, and/or 6G communication network. In particular, the security module $SM_{CN}$ can be realized as a hardware and/or software solution.

In an embodiment, the security module $SM_{CN}$ comprises a channel de-coding component. The channel de-coding component provides the same functionality as the channel de-coding component described within the context of the security module $SM_R$ of a receiving unit. Applying such a channel de-coding component can result in better outcome if the secure communication channel SEC over which the sender unit sends the message m introduces a certain noise level to the message m as to degrade the signal.

According to a fifth aspect of the invention, a method for enhancing a security level of a communication signal is being provided, comprising the following steps:

- receiving a message m as input data;
- adding artificial noise of a level $N_{Art}$ according to a function $f^1(m)$ to the message m so that

  ◦ after a transmission of the communication signal x over a communication channel T with a noise level $N_T$ to a receiver that transforms the communication signal x to the communication signal y, the message remains readable to the receiver;
  ◦ after a transmission of the communication signal x over a communication channel E with a noise level $N_E$ larger than $N_T$ to an eavesdropper that transforms the communication signal x to the communication signal z, the message gets unreadable to the eavesdropper;

- optionally: coding the message m to protect the message m against errors of the communication signal x that occur during transmission over the communication channel T with a noise level $N_T$.

All the other features described above within the context of the security modules $SM_S$ and/or $SM_R$ that are not in technical contradiction with the method can also be applied to the method.

In an embodiment, $N_{Art}$ is being determined by estimating the noise level $N_E$ of communication channel E by measuring properties of the communication channel E and/or extracting channel properties from test messages, in particular from well-defined test messages, between the sending unit und the receiving unit that are positioned at possible locations of the eavesdropper.

This provides the advantage that $N_{Art}$ can be set to an appropriate and optimized level.

In an embodiment, $N_{Art}$ is set by applications and/or services that create the message m.

This provides the advantage that security critical applications and/or services can demand a higher level of added artificial noise $N_{Art}$.

According to a sixth aspect of the invention a secure communication signal x is being provided that is obtainable by the method described above.

This communication signal provides semantic security for the m that is part of the communication signal x if the communication signal takes travels over the communication channel E with the noise level $N_E$.

In the following, preferred implementation examples of the present invention are explained with reference to the accompanying figure:

Fig. 1:  shows the mapping of a message $m_i$ to a bit string $v_{ib}$;

Fig. 2:  shows a schematically overview of a wiretap scenario;

Fig. 3a, b:  show an integration of the security module SMs of Fig. 2 in a protocol stack;

Fig. 4a, b:  show a possible communication protocol according to the invention if a seed S is used;

Fig. 5:  shows possible use cases of the invention;

Fig. 6a:  shows a relationship of DER vs. CSI at the eavedropper for different QoSEC indices and message length k;

Fig. 6b:  shows a table of examples of a quality of security (QoSEC) dictionary for channel output to Bob $CSI_B$ and message length $k_1$;

Fig. 7:  depicts a flowchart showing the steps needed when deciding to encode a message;

Fig. 8a:  shows a service and/or app-oriented implementation of the SMs and/or the $SM_R$ at the data layer;

Fig. 8b:  shows a service and/or app-oriented implementation of the SMs and/or the $SM_R$ at the physical layer;

Fig. 9:  a communication system according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

The term semantic security exists in the fields of information-theory and cryptography. To make things even clearer, we briefly discuss the differences and similarities of the term semantic security in both fields:
Both information theory and cryptography define "semantic security", but it is important to note that these are distinct concepts. We apply the information-theoretic meaning in our document.

A communication scheme for the wiretap channel satisfies information-theoretic semantic security if the eavesdropper is unable to infer any information about the transmitted message from his knowledge and observations irrespective of the probability distribution of the messages. The independence of the message distribution is what characterizes semantic security and what distinguishes semantic security from weaker types of security, where security is required only on average with respect to an assumed probability distribution of the messages, whether this be the "true" one or otherwise. (The probability distribution of the messages could be described as the "type" of message. For instance, a text from a newspaper encoded in binary letters will likely have a different distribution than binary control messages for a wireless channel.)

Whether or not information-theoretic semantic security is satisfied can be measured mathematically by various methods. There are authors who call a specific such method "semantic security". In this invention information-theoretic semantic security can hold if it can measured by any method which quantifies our above definition of measuring security without averaging over the messages with respect to any probability distribution.

If a communication scheme satisfies information-theoretic semantic security, then the eavesdropper can apply any operation to his observations and still will not obtain any information about the transmitted message. These operations are not bound to being implementable on any type of computer, let alone of being computable in finite time. In contrast to this, cryptographic semantic security only considers eavesdroppers who are computationally bounded, i.e., the operations which they can perform are limited to being implementable on a computer and to produce an output in reasonable time.

Before presenting the technical integration of semantic security into technical components of terminals, communication systems, etc. the theoretical background shall be discussed briefly. At this point it is stated that it can have a technical effect on the outcome of semantic security which theoretical functions are implemented and how these theoretical functions are implemented.

An overview of existing metrics for measuring information-theoretic security are given next for the sake of completeness and in order to place the metric used by the proposed architecture in context.

Probability of Error:

The most straightforward approach for evaluating the likelihood of the eavesdropper to extract the original message out of its channel output consists in using the same decoders employed at the legitimate receiver and measuring the decoding error probability. Since the eavesdropper is assumed to have knowledge on the architecture details used, it is also assumed to have access to such decoders. However, bit or block error rates (BER, BLER) do not faithfully characterize the statistical independence between the sent message and the channel output at the eavesdropper. Such lack of trustworthiness can deceive the security assurance level of a system, therefore this metric is not suitable for evaluating the information-theoretic security level in the system.

Weak Secrecy measures the normalized mutual information between the sent message $M$ and the channel output at Eve after n observations $Z^n$, as defined by

$$\frac{1}{n} I(M;\ Z^n). \quad (1)$$

However, this metric has been proven unreliable and therefore it is also not a trustworthy way to measure information-theoretic security.

Strong Secrecy is a stronger notion of security, where the total information leakage is quantified by the mutual information between the message $M$ and the $n$ observation of the channel output $Z^n$,

$$I(M;\ Z^n). \quad (2)$$

This metric, nonetheless, assumes that the eavesdropper's a priori knowledge is restricted to the true message distribution, making it weaker than the concept of semantic security that will be discussed next. Therefore, strong secrecy will not be used as a security assurance metric in the proposed architecture.

The concept of semantic security was first introduced in "M. Bellare, S. Tessaro, and A. Vardy, "Semantic Security for the Wire-tap Channel," in Advances in Cryptology - CRYPTO 2012, ser. Lecture Notes in Computer Science, R. Safavi-Naini and R. Canetti, Eds. Berlin, Heidelberg: Springer, 2012, pp. 294-311" and it is the strongest information-theoretic metric known today. In formal terms, semantic security information leakage is defined as the maximization over any arbitrary message distribution $P_M$ of the mutual information between the originally sent message, M, and the corresponding n observations of the channel outputs at the eavesdropper's end, $Z^n$, carrying such message.

For a wiretap code based on a preferred modular scheme, a public seed $s \in S$ can be used that introduces randomness in the security functions, e.g. IT-PLS encoding function at the IT-PLS component 225 of the proposed architecture when mapping the message m 215 to the bit string v 235, as graphically depicted in Fig. 1.

Fig. 1 shows that the secure message $m_i$ 215 is mapped to a bit string $v_{ib}$ according to an encoding security function $f_s^{-1}$ 100. The index i indicates that any of the b bit string belongs to i-th secure message. The number of possible bit strings b varies according to the coding rate used by the channel coding component depending on the channel conditions to Bob.

Thereby, since the distribution of $Z^n$ also depends on the seed, S, assuming that the message M was sent, the mutual information is then given by

$$\max_{P_M} I(M;\ Z^n, S). \quad (3)$$

As the code word length $n$ increases, the information leakage to the eavesdropper converges to zero, thus asymptotically achieving perfect secrecy, wherein the code word length $n$ is related to the seed S.

Since semantic security provides provable security assurance, it is suitable for future-proofing communication systems. Furthermore, semantic security can be defined based on metrics that have an operational meaning and thereby that can be experimentally measured. Because of these reasons, the inventive architecture can employ security functions in the IT-PLS component 225 that exclusively ensure information-theoretic semantic security.

Wiretap code constructions that use the seeded modular coding scheme and ensure information-theoretic semantic security are based on functions that introduce a level of noise that is optimized with respect to the following goal: the noise added on the message shall not trespass a certain level so that Bob is still capable of reading the message while the noise added to the message shall be enough combined with the noisier path to Eve, so that Eve will not be able to read the message. The technical functionality that adds this noise to the message can be described as being an "artificial-noise-generating function" because in contrast to the noise introduced by the communication path, it is not inherent to the physical properties of the communication path. As this artificial-noise-generating-function enhances the security of the message it can also called "security function".

The statistical difference in the channel outputs y 250 to Bob and z 285 to Eve is exploited to provide message confidentiality by embedding information-theoretic security in the communication system. A security layer, e.g. the security module SMs 220 of Fig. 2, at the transmitter end according to the invention can perform this task by mapping the secure message to a code word according to a randomized encoding function, $f_S^{-1}$ 100, as depicted in Fig. 1. At the receiver end, the decoding function fs performs the demapping to the originally transmitted secure message with the help of the seed "S". However, due to the higher noise level of the channel output z to Eve, even by using the seed "S", Eve will not be able to decode the message appropriately.

Examples of explicit code constructions of security functions 100, also named artificial-noise-generating functions, ($f_S^{-1}$, $f_s$) that ensure semantic security for arbitrary channels and can be used according to the invention have been found within the following disclosures that are thereby fully incorporated in the invention: M. Hayashi and R. Matsumoto, "Secure Multiplex Coding With Dependent and Non-Uniform Multiple Messages," IEEE Transactions on Information Theory, vol. 62, no. 5, pp. 2355-2409, May 2016; and M. Wiese and H. Boche, "Mosaics of combinatorial designs for information-theoretic security," Designs, Codes and Cryptography, vol. 90, no. 3, pp. 593-632, Mar. 2022.

In a special embodiment, the security function function und reducing functionality can be described as follows:

Accordingly, semantic security can be achieved with a positive rate by employing a universal hash function (UHF) in the security component of the modular coding scheme for wiretap channels. Under this scheme, the seed $s = (a, t)$ consists of two components $a$ and $t$, which represent each a binary sequence of length $l$. Additionally, the first component of the seed, $a$, must not be a sequence containing exclusively zeros. Given a binary message $m$ of length $k$ that shall be securely transmitted by Alice, the security function $f_S^{-1}$ that performs a mapping

$$f_S^{-1}: \{0,1\}^k \times \{0,1\}^{l-k} \rightarrow \{0,1\}^l$$ to the bit string $v$ that is defined as

$$v = f_S^{-1}(m, r) = a^{-1} * (\mathrm{m}||\mathrm{r}) \oplus \mathrm{t} \ , \quad (4)$$

where $r \in \{0,1\}^{l-k}$ is a binary uniform random vector of length $l - k$, $k < l$, generated by the transmitter and not communicated to any other party. The operations $*$, $(\cdot)^{-1}$, and $\oplus$ represent the multiplication, inverse, and addition in the Galois field $GF(2^l)$, while II denotes concatenation of binary sequences.

At the receiver end, the IT-PLS decoder receives the output of the coding layer $\hat{v}$ and decodes the binary message $\hat{m}$ by employing the decoding function $f_s: \{0,1\}^l \rightarrow \{0,1\}^k$, defined as

$$\hat{m} = f_s(\hat{v}) = [(a * \hat{v}) \oplus t]_k \ , \quad\quad (5)$$

where the operation $[\cdot]_k$ denotes the extraction of the first $k$ bits, while the remaining bits are disregarded.

The existence of a second family of code constructions using biregular irreducible functions (BRI) was demonstrated in Semantic Security via Seeded Modular Coding Schemes and Ramanujan Graphs," IEEE Transactions on Information Theory, vol. 67, no. 1, pp. 52-80, 2021 using graph theory. Explicit code constructs are given in M. Wiese and H. Boche, "Mosaics of combinatorial designs for information-theoretic security," Designs, Codes and Cryptography, vol. 90, no. 3, pp. 593-632, Mar. 2022, where four functional forms of mosaics of combinatorial designs with different color rate ranges are proposed based on algebraic operations. These functions operate using the seed as described before, but have the advantage of introducing less overhead by requiring a shorter seed in certain scenarios, when compared with the functions described before.

Fig. 2 shows a schematic overview of a wiretap scenario 200.

A user Alice can use a sending unit 205, like a smart phone 205 or any other communication terminal 205, to send a message to the receiving terminal 210 of a user Bob. The sending unit 205 generates a message m 215, wherein the message m 215 is being transmitted to a security module 220. The security module SMs 220 comprises an artificial-noise-generating component 225, in particular a IT-PLS component 225, and can additionally comprise a channel coding component 230, in particular with a FEC functionality. The artificial-noise-generating component 225 and the channel coding component 230 can be arranged in a modular way independently from each other and work as follows: the message m 215 is an input for an artificial-noise-generating component 220 and is processed by the artificial-noise-generating component 220 to become an output of the artificial-noise-generating component that is labeled as communication signal v 235, wherein the artificial-noise-generating component 220 adds artificial noise of a level $N_{Art}$ to the message m 215 according to the security function $v = f^{-1}(m)$. Then, the communication signal v 235 is an input of the channel coding component 230 and is processed by the channel coding component 230 to become an output that is called communication signal x 240 by adding redundancy information that can be used to correct the signal by the receiving unit 210.

The communication signal x 240 can then be transmitted by sending means of the sending unit 205 over the communication channel T 245 with a noise level $N_T$ that transforms the communication signal x 240 to the communication signal y 250. The communication signal y 250 is being received by the receiving unit 210 of Bob and is an input of a security module $SM_R$ 255 of the receiving unit 210. The security module $SM_R$ 255 comprises an artificial-noise-removing component 260, which can be a IT-PLS component 260, and can comprise a channel coding component 265. The artificial-noise-removing component 260 and the channel coding component 265 can be arranged in a modular way independently from each other and work as follows: The communication signal y 250 is an input of the channel coding component 265 that corrects bit-errors of the communication signal y 250, which has been introduced by traveling over the communication channel T 245 with a noise level $N_T$. This transforms the communication signal y 250 to the communication signal $\hat{v}$ 270. $\hat{v}$ 270 is the input of the artificial-noise-removing component 260 that applies the security function $\hat{m} = f(\hat{v})$, wherein $\hat{m}$ 275 corresponds to the original message m 215. Hence, Bob is able to read the original message m 215.

By sending the communication signal x 240, the communication signal x 240 is in general not only restricted to travel over the communication channel T 245. For example, if the communication signal x 240 is a wireless communication signal it travels into many directions in parallel that corresponds to many different communication channels. In particular, the communication signal x 240 can travel over the communication channel E 280 that has a noise level $N_E$ that is larger than the noise level $N_T$. If the added artificial noise $N_{Art}$ was set appropriately this leads to the effect that traveling over the noiser communication channel E transforms the communication signal x 240 to a communication signal z 285 that shows so much random noise that it is not possible to obtain the original message wherein $\hat{m}$ 275 by Eve with her communication terminal 290 - in other words the communication signal z 285 is semantically secure. This can be expressed mathematically as $\hat{m} \neq f(\hat{z})$.

Even more randomness can be generated to the communication signal x 240 if a public seed S 295 is being applied as follows $f_S^{-1}(m, S)$ and $f_S(y, S)$ and shared between Alice and Bob. Even knowing the public seed S 295 does not help Eve to obtain the original message m because of the semantic security.

The inventive communication signals x 240 or v 235 are being characterized as to have an artificially added noise level $N_{Art}$ that is designed so that $\hat{m} = f(\hat{v})$ can be applied if the communication signals x 240 or v 235 travel over a communication channel T with a noise level $N_T$ and that the artificially added noise level $N_{Art}$, i.e. the amount of added useless information, is high enough so that $\hat{m} \neq f(\hat{z})$ results if the communication signals x 240 or v 235 travel over the noisier communication channel E with a noise level $N_E$.

In an embodiment aspects of Fig. 2 can also be described as follows: If we consider any communication system with any channel code realization, where the channel code performs well, then the proposed architecture employs an additional IT-PLS component 225 that introduces semantic security into the system. Out of this IT-PLS component 225, multiple IT-PLS encoder and IT-PLS decoder 260 implementations are possible. A feature of the proposed system architecture is that by employing the IT-PLS encoder and the IT-PLS decoder, which can be realized using different code constructions, we can achieve semantic security independent of the error correction code and other physical-layer procedures used. The proposed architecture offers semantic security for different channel conditions. In order to achieve this, it can dynamically adapt the rate of the IT-PLS component 225, $R_{PLS}$, according to a rough estimation of the channel output to the eavesdropper. In contrast to state-of-the-art code constructions, in the proposed architecture design the knowledge of the channel conditions to the eavesdropper must not be necessarily known to the transmitter in order to ensure semantic security. An estimated value, which does not need to be particularly precise, suffices to adapt the secrecy rate accordingly. The IT-PLS component 225 of the proposed architecture can employ a seeded technique. That is, the public seed can be used for assuring semantic security and countering the uncertainty regarding the knowledge of the channel to the eavesdropper. The advantage of using the public seed is that the architecture remains resilient against eavesdropping attacks despite an incomplete knowledge about the eavesdropper's channel conditions.

This text describes the following four main ideas, which can be treated separately: a system architecture that enforces of semantic security, modularity of the proposed system architecture that makes it backward compatible, technology-agnostic, and scalable; adaptability of the security assurance of the system for dynamic channel conditions; channel abstraction by the system architecture, making it applicable to different transmission media.

In a nutshell, embodiments or the overall invention can be stated as follows:

- a system architecture that can

  ∘ achieve perfect secrecy asymptotically over a block length,

  ∘ provide a flexible adaptable security rate, $R_{sec}$ = k/n,

  ∘ ensure semantic security against eavesdropping attacks, where the eavesdropper has a priori knowledge of the architecture design, has a priori knowledge of the security parameters used for each transmission, has a priori knowledge of message distribution, is assumed to have unlimited time and computational resources, under the condition that the eavesdropper uses a noisier channel with respect to the channel Bob uses as the legitimate receiver;

  ∘ use a randomly generated number denominated the seed: which can be public, i.e., known by all active and passive participants in the communication, can be chosen uniformly randomly, can be reused for multiple transmissions, can introduce a negligible overhead in the communication, can be updated at periodic intervals, which can depend on the number of transmissions and need not to depend of a fixed time interval, can be transmitted during low traffic intervals and locally stored for later use, can have a length determined by the rate of the IT-PLS component,

  ∘ use a wiretap code design that can comprise two modular components:

    ▪ the IT-PLS component 225, 260, which

      - can have a rate of $R_{PLS}$ = k/l; can be realized using various different embodiments of the IT-PLS encoders and IT-PLS decoders; is responsible of guaranteeing semantic security in the system; can be flexibly integrated either at the physical layer or data link layer of the OSI model; can be designed independently of the coding layer; can adapt its rate $R_{PLS}$ dynamically to match a changing rate of the coding layer $R_{cod}$; does not influence the robustness of the communication realized by error correction codes and other physical-layer approaches such as scrambling, interleaving, beamforming, modulation, frequency hopping, among others; can use a randomly-generated public seed with the characteristics mentioned before for securely encoding incoming messages;

      - can dynamically change its rate to adapt to different wiretap scenarios by i) grouping incoming bit streams in messages of size k, ii) changing the message size *k* that is input to its IT-PLS encoder and that is output from its IT-PLS decoder, iii) using different algorithms for the implementation of the IT-PLS component, iv) changing the length of the public seed accordingly, and/or v) adapting the design of its security mechanism in a flexible manner in order to ensure semantic security for different channel conditions;

      - can be dynamically activated or deactivated without affecting the robustness of the system;

    ▪ and the channel coding component 230, 265, which

      - can have a coding rate of $R_{cod}$ = l/n ; can be implemented using existing error correction codes, can be implemented based on new code designs; can be in part responsible of the robustness in the communication together with other physical-layer procedures; can together with the security component contribute to the overall security rate $R_{sec}$ of the presented architecture; can influence the effective channel to the eavesdropper;

  ∘ can abstract the channel medium (wireless, fixed line, etc.), thereby it can be deployed in a myriad of communication systems achieving semantic security, including, but not restricted to classical wireless channel, optic-fiber channels, and/or quantum channels;

- and protocols for the exchange of the public seed, a seed reuse, and/or a seed update rate.

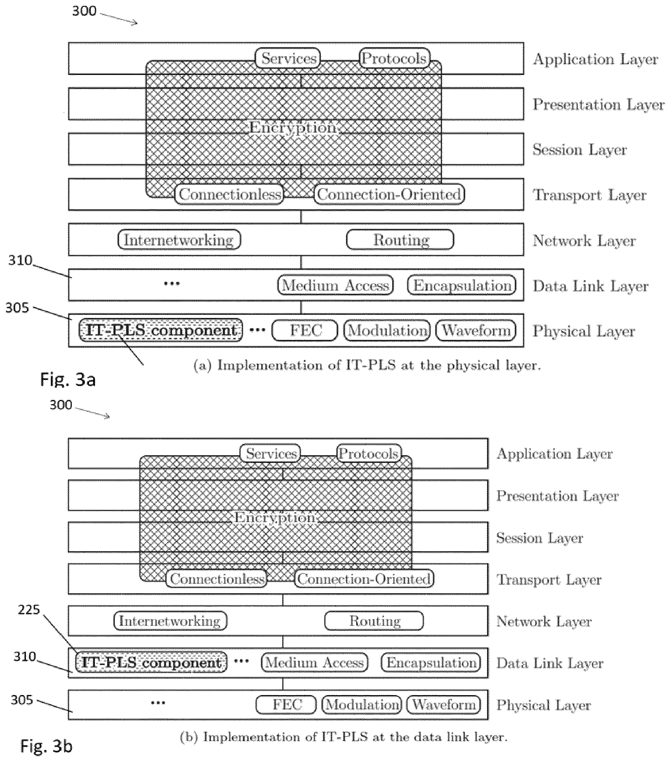

Fig. 3a,b show an exemplary integration of the security modules of Fig. 2 in a protocol stack of the sending unit 205.

Since cryptography takes place at the higher layers of the OSI protocol stack 300, as depicted in Fig. 3a,b, the integration of cryptographic algorithms is transparent for the lower layers, where the artificial-noise-generating component, in particular the IT-PLS 225, is embedded in the system architecture. The architecture design can integrate the IT-PLS 225 component either into the physical layer 305 as shown in Fig. 3a, or into the link data layer 310, as shown in Fig. 3b. The flexible decision where the integration takes place allows to optimize its implementation in new upcoming technologies (in the former case), while remaining flexible for upgrading legacy and existing communication systems via software or firmware updates (in the latter case).

In the case of the receiving unit, the IT-PLS 260 can also be integrated either into the physical layer 305 or into the link data layer 310, and this even irrespective of where the IT-PLS 225 is being integrated.

Currently existing optimal channel coding procedures at the physical layer can remain as they are. Such architecture introduces semantic security as a new feature, which can be integrated either into the data link layer or into the physical layer of the OSI protocol stack 300. A selection of the services offered by each layer of the OSI protocol stack 300 is shown.

The IT-PLS 225 of the sending unit and/or the IT-PLS 260 of the receiving unit 210 can be integrated into existing systems by over-the-air updates that leave the error correction code and other physical-layer procedures responsible of the robustness intact, and just deploying a pre- and post-processing step that implements the security functions, avoiding the need to re-design the lower layers of the protocol stack. Some embodiments for the integration into existing and new systems include, but are not restricted to, fiber end points (e.g., Ciena, Adva devices), network cards, mobile devices and so on.

The public seed can be reused over multiple transmissions. This decreases the overhead that the seed would introduce if it were not reusable. The architecture has full control over the frequency at which the seed can be reused, which can be determined based on the secrecy rate $R_{\text{sec}}$.

To further reduce signaling overhead within the communication network, the seed S 295 can be exchanged during low traffic periods (e.g., outside the peak hours, overnight, etc.) among the end points of the network and can be locally stored by the legitimate communication parties to be used for the security protocols. This can be done following a deterministic pattern that optimally exploits the seed update rate based on the used secrecy rate $R_{\text{sec}}$.

The seed S 295 can be updated at periodic intervals determined by the number of transmissions if a stronger protection is required in order to increasingly confuse potential eavesdroppers present in the communication.

Furthermore, since the length of the seed $d$ can be chosen dynamically depending on the security rate $R_{\text{sec}}$ that aims to be achieved, legitimate transmitters and receivers need to agree on a protocol for ensuring that they use previously exchanged seeds with the correct updated length. A possible realization of this is to share one or more long seeds that can be cut off depending on the required seed length $d$ at a given point in time, thus saving rate by not exchanging the seed itself but just its length.

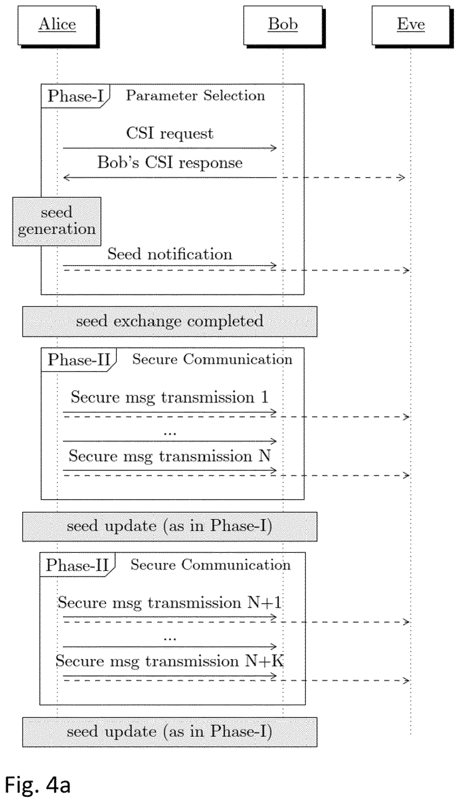

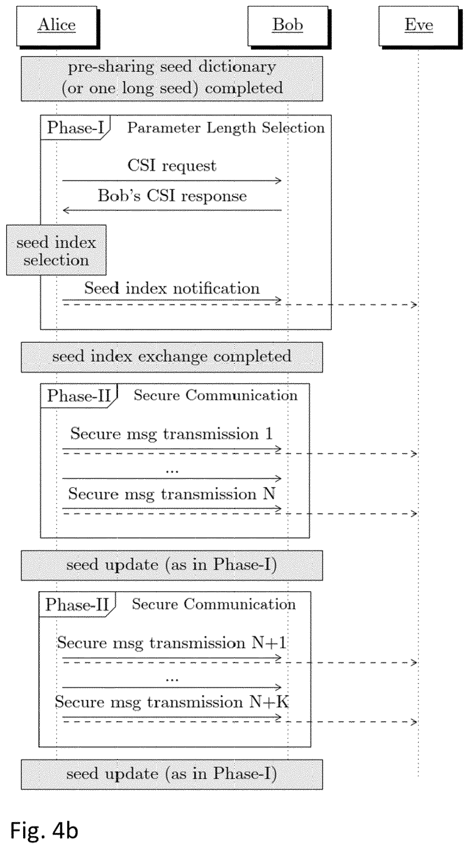

Fig. 4a,b show a possible communication protocol according to the invention if the seed S 295 is used. Overheard messages by Eve are shown by dashed lines. The solid lines represent the messages received by Bob.

In order to ensure the semantic-secure transmission of messages, the transmitter "Alice" can first requests channel state information (CSI) from the legitimate receiver "Bob". This can be done based on exchanging well defined test messages while calculating the level of noise $N_T$ of the communication channel T 245 by evaluating the bit errors caused by $N_T$. It also possible that CSI can be obtained by specifying and exchanging the physical properties of the channel T 245, that information can be provided by a telecommunication provider. Communication channel properties can be obtained from the channel state information.

Based on the CSI measurements at the legitimate receiver, which are fed back to the transmitter, the latter decides to use a modulation and coding scheme index that ensures certain level of robustness in the communication. The IT-PLS 225 component is then configured with a rate $R_{\text{PLS}} = k/l$ that is influenced by the coding rate of the channel coding component $R_{\text{cod}} = l/n$ in order to offer an overall secrecy rate $R_{\text{sec}} = k/n$. Based on the type of the IT-PLS 225 component and its rate $R_{\text{PLS}}$, the transmitter agrees on using a seed length $d$. That is, the seed's S 295 length is set to match the parameters selected by the channel coding component, which also influences the effective channel to the eavesdropper.

The generation of the seed is done randomly, once its length is set. Once the seed is generated, it is transmitted to Bob so it can be employed by his IT-PLS 260 decoder. The main objective of this seed exchange is to facilitate the IT-PLS 260 decoding of the received code words $\hat{v}$ at the legitimate receiver by performing the inverse operations carried out by the IT-PLS encoder. The parameter selection procedure is shown in the Phase-I of Fig. 4a

After the seed's exchange is completed, both Alice and Bob have knowledge of the randomly generated seed S and can use it at their respective IT-PLS components 225, 260 of the proposed architecture. From this point onward, the messages that will be sent by the proposed architecture will be securely encoded using this seed. This represents the Phase-II in Fig. 4a.

Due to the reuse of the seed as discussed before, the same seed S can be employed over multiple transmissions. Each time that the seed is reused, it causes a linear increase in the information leakage to the eavesdropper. Therefore, depending on the given secrecy level, which determines whether the amount of leaked information after N transmissions is negligible or not, a seed update interval based on the number of channel usages (i.e., transmissions) can dynamically be determined by the architecture.

Fig. 4a shows this graphically, where after $N$ and $K$ channel usages, i.e., $N$ and $K$ secure message transmissions, the seed S is updated by generating a new seed randomly and notifying it to Bob, as originally done in Phase-I. This update is independent of the channel conditions of the legitimate receiver, which may remain constant. Nonetheless, if the CSI measurements at Bob change or if a different channel coding component realization is used which requires a new coding rate $R_{cod}$, not only a seed update but also a secrecy rate update and a new seed length d may be needed.

Fig. 4b shows an extended scenario, where a list of seeds S has previously been shared during a period of low traffic. The seed to be used in the communication is still generated randomly at the transmitter, but instead of communicating it to the legitimate receiver, an index belonging to a "seed dictionary" common to Alice and Bob is transmitted over the air.

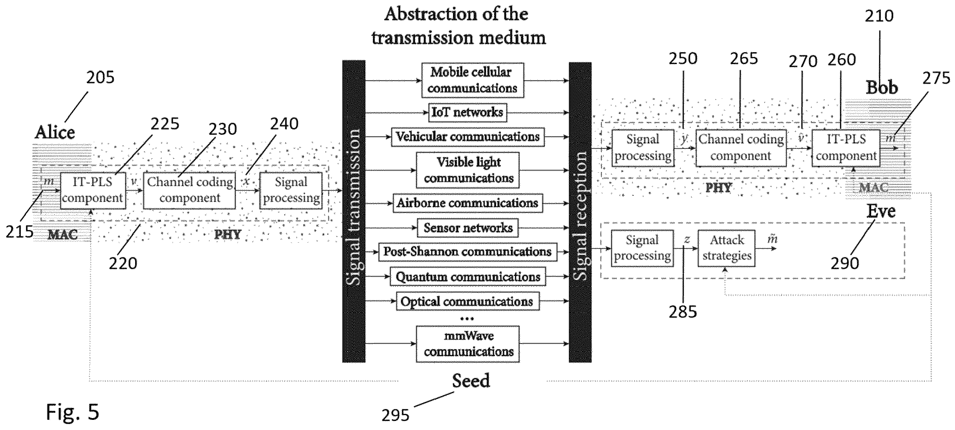

Fig. 5 shows the integration of the proposed seeded architecture for the wiretap channel, comprising of independent IT-PLS 225, 260 and channel coding components 230, 265, into the lower layers of the protocol stack 300. The abstraction of the channel allows its deployment regardless of the transmission medium.

Since the proposed architecture abstracts the transmission medium, provable secure communication can be realized independently of the transmission channel. A selection of wiretap scenarios involving different technologies and use cases is depicted in Fig. 5. That is, using the proposed architecture we can also provide semantic security to future quantum communications among others. For example, the following use cases are possible: Cellular mobile communications (e.g. 3G, 4G, 5G, 6G), Ultra-reliable low-latency communications, Point-to-point communications, Broadcast (point-to-multipoint) communications, Post-Shannon communications, Quantum communications, Vehicular communications, Fiber-optic communications, mmWave communications, Line of sight (LoS) and non-LoS communications, Non-terrestrial communications, Visual light communications, Peer-to-peer networks, Internet of things (IoT) networks, airborne communications, sensor networks, Secure energy-constrained networks, Sensor networks, and/or Industry X.0 networks, etc.

Dictionary-based Security Assurance Levels:

Based on the semantic security metric discussed above, the security assurance of a system can be established as long as information on the channel conditions to Bob become available. As mentioned before, a rough estimate for the channel to Eve suffices.

According to the specific embodiment of this invention, the CSI can be represented using different key performance indicators (KPIs), such as, but not restricted to, signal-to-noise ratios (SNRs), received signal strength indicator (RSSI), signal-to-interference-and-noise ratio (SINR), reference signal received power (RSRP) levels, among others, which can be measured by the sending unit, the receiving unit and/or a measuring unit within the communication network, wherein the KPIs can be shared between the respective units.

Since the conditions of the channels T 245 and/or E 280 can change drastically in more dynamic settings such as mobile communications, an adaptive element that orchestrates the parameters to be used and provides a semantic security assurance level is required. On the other side, in scenarios involving fixed infrastructure-based systems, the channel conditions are expected to experience smaller fluctuations, which can be determined based on prior channel measurements of the premises where the communication takes place.

An example belonging to the latter scenario may involve a campus network, where the channel quality of potential eavesdroppers outside such facilities can be measured beforehand by recording the signal quality at the outer fence of such facilities.

The pattern followed for exchanging the seed in idle periods can be realized by exchanging a pool of seeds, which can be then identified based on an shorter identifier or used under special conditions (e.g., specific channel state levels and/or times of the day), thus refraining the need of exchanging the seed itself. In this case, the two parties only need to negotiate which subset of the previously shared seed pool they make use of. Furthermore, a similar approach can be used for communication the updated seed length $l$.

Additionally, since the exchange of CSI is an already established procedure in most of today's communication networks, the presented architecture can reuse the CSI exchange for the securing of the system, thus not posing extra transmission overheads onto the system.

In a more general setting, given that normally the channel conditions, i.e. the noise $N_E$, to Eve are unknown, for practical settings such values can be either estimated using informed assumptions based on available information about the system's setup, or estimated based on the expected communication ranges for a given scenario. In both cases, for a given CSI at Bob, different quality of security (QoSEC) levels can be parametrized in a dictionary, where for each QoSEC index a local maximum CSI at Eve ($CSI_E$) can be foreseen.

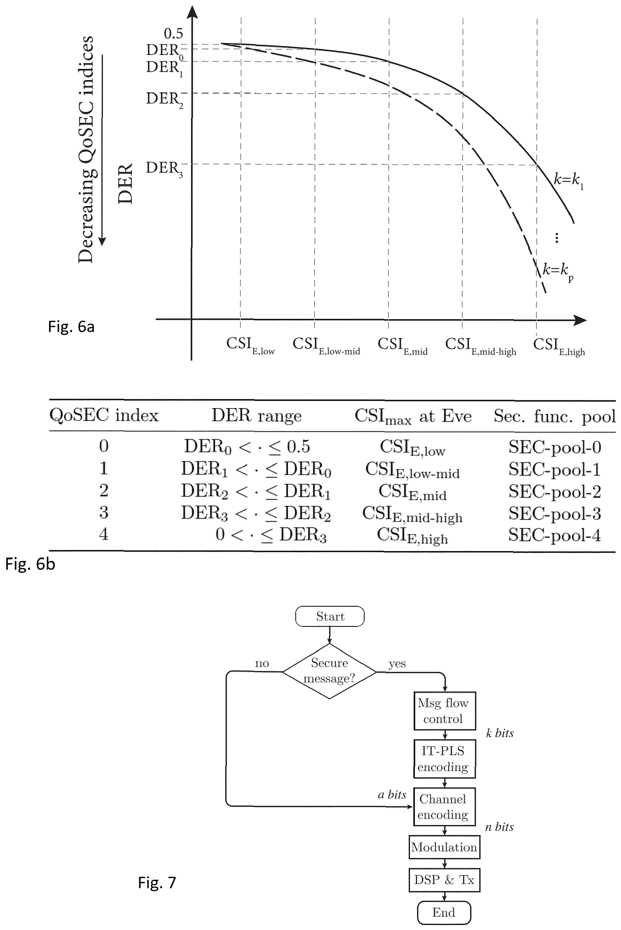

Semantic security can be measured in practical settings by calculating the distinguishing error rate (DER), which is a metric that quantifies the degree of message indistinguishability faced at the eavesdropper. It can be regarded as the likelihood of failure when the eavesdropper is given two possible messages and is confronted to decide which one was sent. The maximum DER value is 0.5, which provides the eavesdropper with no greater advantage than performing a coin toss. As the DER value decreases, the likelihood that Eve guesses correctly increases, thus degrading the IT-PLS assurance of the system, as shown in Fig. 6a.

Fig. 6b shows an example how the realization of such a dictionary for a specific CSI at Bob $CSI_B$ and message length $k = k_1$ can be done. In a practical application, one such table is available for each value that k takes. Accordingly, a given QoSEC index guarantees a minimum distinguishing error rate as long as the CSI at Eve is below the threshold set in the dictionary. It is also possible to measure semantic security in experiments.

In order to cover multiple channel conditions at Eve and several message length values, the transmitter can store a multi-dimensional dictionary.

For each QoSEC index, a pool of security functions (SEC-pool) that ensure the intended DER range are made available to be used by the sending unit 205. The selection of the QoSEC index can be adjusted by the orchestrator to new channel conditions in case of dynamic scenarios. For each specific QoSEC index, a different SEC-pool that ensures secure communications is dynamically assigned. In order to allow link adaptation, the rates need also to be updated based on the information contained in the multi-dimensional dictionary, as shown in the flowchart of Fig. 7, wherein Fig. 7 depicts a flowchart showing the steps needed when deciding to encode a message using the IT-PLS component. The decoding operation does basically revert these steps. Similarly to the seed exchange, the notification of a specific IT-PLS security function can done over the air via unique identifiers that are known to all participants in the communication.

Application and/or service-oriented architecture:

A new key feature of 5G cellular networks, which will be further supported by 6G systems, consists in integrating a large amount of different application areas, known as verticals, each with different QoS requirements and running on sliced networks specifically designed for their needs.

The preferred feature of an application and/or service-oriented implementation of the security modules SMs 220 and/or $SM_R$ 255 accounts for these different security requirements:

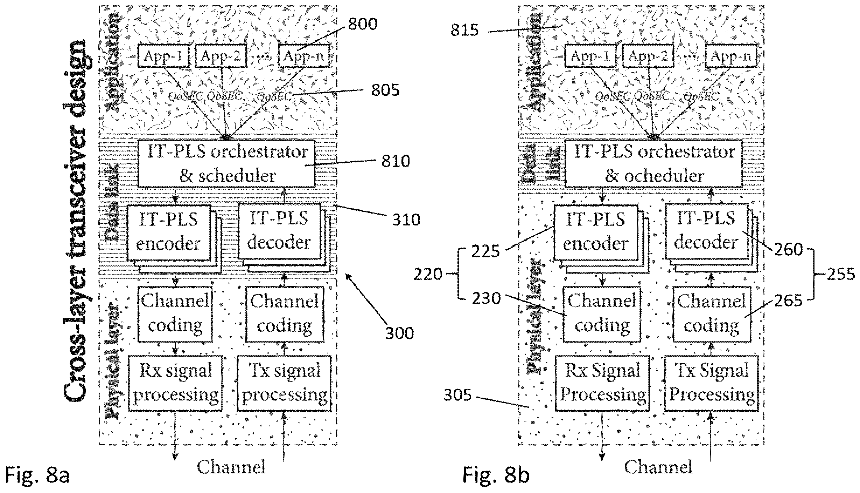

Fig. 8a shows a service and/or app-oriented implementation of the SMs 220 and/or the $SM_R$ 255 at the data layer 310.
Fig. 8b shows a service and/or app-oriented implementation of the SMs 220 and/or the $SM_R$ 255 at the physical layer 305.

In the proposed app and service-based architecture, different apps 800 require different QoSECs, which transmitted to a IT-PLS orchestrator 810. The lower layers are abstracted from the upper ones by the middleware denominated IT-PLS orchestrator 810, that is responsible for interfacing between these layers and enabling the communication between them, so that the services offered by the lower layers can be adapted to the demands of the application layer. This allows to have a configurable system architecture down to the physical layer that fulfills the requirements posed by distinct applications 800 and/or services.

By introducing IT-PLS as an embedded feature of such service oriented architecture (SOA) that can be activated or deactivated by an application layer 815, additional protection against eavesdroppers in a post-quantum era can be transparently assured in SOA systems without having an impact on the system's reliability. Further, the latency overhead introduced is negligible as shown in "L. Torres-Figueroa, M. Hörmann, M. Wiese, U. J. Mönich, H. Boche, O. Holschke, and M. Geitz, 'Implementation of Physical Layer Security into 5G NR Systems and E2E Latency Assessment', in submitted to 2022 IEEE Global Communications Conference (GLOBECOM), 2022".

Under this paradigm, the application layer 815 sets the requirements for ensuring a specific QoSEC level in the communication using the IT-PLS component 225 of the proposed architecture. This QoSEC level is associated with a level of information leakage to the eavesdropper that is regarded as acceptable for the application. In order to quantize such value, the QoSEC maps to a DER range. For realizing such request, an application requests the IT-PLS orchestrator 810 to enforce the use of a given QoSEC index at lower layers. Upon reception of such request, based on channel information the IT-PLS orchestrator 810 performs a dictionary-based decision regarding the low-level parameters to be employed for assuring the requested QoSEC level, sending an acknowledgment back to the upper layers via a middleware in case the requested QoSEC can be fulfilled, and waiting for confirmation before setting the parameters in place. If the requested QoSEC level cannot be assured, this can also be communicated to the upper layers, which then decide whether to decrease its QoSEC level requirement, to bypass the IT-PLS feature completely or to not perform the transmission of the message m 215 due to the low security.

Another embodiment contemplates a simpler way of mapping the DER levels to security levels, for instance such as low, medium and high, which simplifies the structure of this dictionary.

As discussed previously, the parameters needed for the establishment of a given QoSEC level are defined in the dictionary, which is meant to be standardized to avoid vendor incompatibilities. Different applications do not need to select specific single low-level parameters but just a QoSEC index. Similar to the case of MCS indices, a QoSEC index suffices for ensuring a specific corre-sponding DER range using IT-PLS and can be also set dynamically for adapting to changing scenarios.

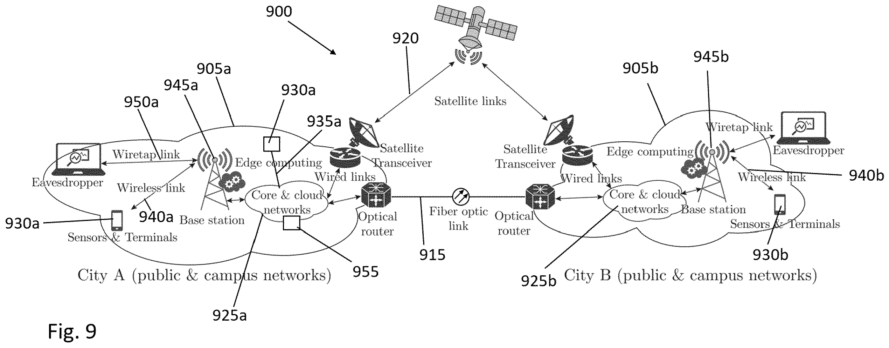

Fig. 9 shows a communication system 900 according to the invention.

Fig. 9 shows a first communication network 905a and a second communication network 905b that can communicate with each other via fiber optic links 915, satellite links 920, and/or cellular communication links. Within each of the communication networks 905a, b there is a core network infrastructure 925a, b, in particular of a telecommunication provider, that provides communication services. User terminals 930a, b (like computers, smart phones, server, IoT devises, etc.) can be connected to the core network infrastructure 925a, b via fixed lines 935a (like XDSL) and/or via cellular channels 940a, b (like 4G, 5G. 6G). The wireless cellular channels 940a, b can be the communication channel T 245 of Fig. 2 that is connected via a base station 945a, b to the core network infrastructure 925a, b. The communication channel E 280 of Fig. 2 to the eavesdropper is represented by the wiretap links 950 a, b.

The user terminals 930a, b are configured to have the security modules SMs 220 and/or $SM_R$ 255, in an embodiment they are configured to have the OSI-layer 300 configuration according to the Fig. 8 a, b.

Hence, when the terminals 930a, b communicate with each other, their communication is semantic secure as described above so that an eavesdropper is not capable of obtaining the secret message m 215.

Fig. 9 additionally shows a security module $SM_{CN}$ 955 that can be located within the core network infrastructure 925a. The security module $SM_{CN}$ 955 can be used as follows. If a user terminal 930 is not able to provide semantic secure transmission, for example because its OSI layer has not been updated or semantic security does not work because of some technical reasons for this user terminal, it is possible to connect this legacy user terminal 930 via a secure fixed line to the security module $SM_{CN}$ 955. The user terminal 930 sends its message m 215 to the security module $SM_{CN}$ 955 that takes over the task of providing semantic security before forwarding the transformed signal v 235 to the receiver. If the security module $SM_{CN}$ 955 is a central throughput unit of the core network infrastructure 925a, this provides the advantage that no extra addressing is necessary to guide the message m 215 to the security module $SM_{CN}$ 955.

**Claims**

1. Security module SMs (220) of a sending unit (205) for enhancing a security level of a communication signal, wherein the security module SMs (220) is configured to receive a message *m* (215) as input data and configured to transform it to a communication signal x (240) comprising the message m (215), wherein the Security module SMs (220) comprises:

   • an artificial-noise-generating component (225) configured to add artificial noise of a level $N_{Art}$ according to a function $f^{-1}(m)$ to the message m (215) so that

      ◦ after a transmission of the communication signal x (240) over a communication channel T (245) with a noise level $N_T$ to a receiver (210) that transforms the communication signal x (240) to the communication signal y (250), the message remains readable to the receiver (210);
      ◦ after a transmission of the communication signal x (240) over a communication channel E (280) with a noise level $N_E$ larger than $N_T$ to an eavesdropper (290) that transforms the communication signal x (240) to the communication signal z (285), the message gets unreadable to the eavesdropper (290).

2. The security module SMs of claim 1, wherein the security module SMs (220) comprises a channel coding component (230), wherein the channel coding component (230) is configured to protect the message m (215) against errors of the communication signal x (240) that occur during transmission over the communication channel T (245) with a noise level $N_T$.

3. The security module SMs of claim 2, wherein the artificial-noise-generating component (225) and the channel coding component (230) are independent from each other.

4. The security module SMs of any of the claims, wherein the security module SMs (220) is implemented within the data layer (310) or the physical layer (305) of the OSI protocol stack (300), in particular wherein the artificial-noise-generating component (225) and the channel coding component (230) are implemented in the same layer or in different layers (305, 310).

5.  The security module SMs of any of the claims 2 to 4, wherein the artificial-noise-generating component (225) is arranged in front of the channel coding component (230) in an outgoing data stream direction.

6.  The security module SMs, wherein $N_{Art}$ is adjustable and/or the functions $f(y)$ or $f^{-1}(m)$ are adjustable.

7.  The security module SMs of claim 6, wherein $N_{Art}$ is adjustable due to specific service requirements, specific application requirements and/or communication channel properties.

8.  The security module SMs of any of the claims 6 to 7, wherein an appropriate seed S (295) is used within the function

$$f_S^{-1}(m, S)$$

9.  The security module SMs of any of the claims 6 to 8, wherein the seed S (295) is a public seed S and/or a re-usable seed S.

10. The security module SMs of any of the claims 8 to 9, where the security module SMs (220) comprises a feedback loop configured to adjust the seed S (295) dynamically during communication.

11. Security module $SM_R$ (255) of a receiving unit for receiving a communication signal y (250) and to extract the message m (215) from the signal y (250), wherein the security module $SM_R$ (255) comprises

    • an artificial-noise-removing component (260) configured to remove artificial noise of a level $N_{Art}$ caused by a function $f^{-1}(m)$ by applying a function $f(y)$ and to extract the message m;

12. The security module $SM_R$ of claim 11, wherein the security module $SM_R$ (255) comprises a channel de-coding component (265), wherein the channel de-coding component (265) is configured to correct bit-errors of a communication signal x (240) that was transformed to the communication signal y (250) by traveling over a communication path T (245), and in particular wherein the channel de-coding component (265) is arranged in front of the artificial-noise-removing component (260) in a data stream in-going direction.

13. A communication terminal comprising the Security module SMs (220) of claim 1 and/or the Security module $SM_R$ (255) of claim 12.

14. Security module $SM_{CN}$ (955) of a communication network (905) for enhancing a security level of a communication signal, in particular between a sender entity (205, 930a) and a receiving entity (210, 930b), wherein the Security module $SM_{CN}$ comprises

    • a first interface $I_{SMCN,1}$ configured to receive a message m from a sending unit over a secure communication path SEC (935a) and a second interface $I_{SMCN,2}$ configured to send a communication signal x (240) comprising the message m (215) over an unsecure communication path T (245) to a receiving unit,
    • an artificial-noise-generating component (225) configured to add artificial noise of a level $N_{Art}$ according to a function $f^{-1}(m)$ to the message m (215) so that

        ◦ after a transmission of the communication signal x (215) over a communication channel T (245) with a noise level $N_T$ to a receiver (210) that transforms the communication signal x (240) to the communication signal y (250), the message remains readable to the receiver;
        ◦ after a transmission of the communication signal x (215) over a communication channel E (280) with a noise level $N_E$ to an eavesdropper (290) that transforms the communication signal x to the communication signal z (285), the message gets unreadable to the eavesdropper;

15. The security module $SM_{CN}$ of claim 14, wherein the security module $SM_{CN}$ is implemented on a throughput unit, for example on a server provided by a telecommunication provider, within the communication network, wherein the throughput unit is in particular implemented at the border of the secure communication network.

**16.** The security module $SM_{CN}$ of any of the claims 14 to 15, wherein the security module $SM_{CN}$ comprises a channel de-coding (265) component.

**17.** A method for enhancing a security level of a communication signal, comprising the following steps:

- receiving a message m (215) as input data;
- adding artificial noise of a level $N_{Art}$ according to a function $f^1(m)$ to the message m so that

  ◦ after a transmission of the communication signal x over a communication channel T with a noise level $N_T$ to a receiver that transforms the communication signal x to the communication signal y, the message remains readable to the receiver;
  ◦ after a transmission of the communication signal x over a communication channel E with a noise level $N_E$ to an eavesdropper that transforms the communication signal x to the communication signal z, the message gets unreadable to the eavesdropper;

- optionally: coding the message m to protect the message m against errors of the communication signal x that occur during transmission over the communication channel T with a noise level $N_T$.

**18.** The method of claim 17, wherein $N_{Art}$ is being determined by estimating the noise level $N_E$ of communication channel E by measuring properties of the communication channel E and/or extracting channel properties from test messages, in particular from well-defined test messages, between the sending unit and the receiving unit, wherein receiving unit is at a position of a possible eavesdropper.

**19.** The method of claims 17 to 18, wherein $N_{Art}$ is set by applications and or services that create the message m.

**20.** Secure communication signal x (240) obtainable by the method according to claim 17.

**Fig. 1**

$m_i$   215

100   *random mapping $f_s^{-1}(m)$*

235

$v_{i1}$   $v_{i2}$   $v_{i3}$   $v_{i4}$   $v_{i5}$   $v_{i6}$   $v_{i7}$   $v_{i8}$   ...   $v_{ib}$

**Fig. 2**

200

Alice   205

215   $m$

220   IT-PLS component   225

$v$   235

Channel coding component   230

$x$   240

280   $E$   245   $T$

285   $z$   250   $y$

Eve   290

Public seed $s$   295

Channel coding component   265

270   $\hat{v}$

IT-PLS component   260

255

Bob   210

$\hat{m}$   275

300

| Services | Protocols | Application Layer |

Presentation Layer

Encryption

Session Layer

| Connectionless | Connection-Oriented | Transport Layer |

| Internetworking | Routing | Network Layer |

310

| ··· | Medium Access | Encapsulation | Data Link Layer |

305

| IT-PLS component | ··· | FEC | Modulation | Waveform | Physical Layer |

(a) Implementation of IT-PLS at the physical layer.

**Fig. 3a**

300

| Services | Protocols | Application Layer |

Presentation Layer

Encryption

Session Layer

| Connectionless | Connection-Oriented | Transport Layer |

225

| Internetworking | Routing | Network Layer |

310

| IT-PLS component | ··· | Medium Access | Encapsulation | Data Link Layer |

305

| ··· | FEC | Modulation | Waveform | Physical Layer |

(b) Implementation of IT-PLS at the data link layer.

**Fig. 3b**

Alice               Bob           Eve

Phase-I    Parameter Selection

CSI request

Bob's CSI response

seed generation

Seed notification

seed exchange completed

Phase-II    Secure Communication

Secure msg transmission 1

...

Secure msg transmission N

seed update (as in Phase-I)

Phase-II    Secure Communication

Secure msg transmission N+1

...

Secure msg transmission N+K

seed update (as in Phase-I)

Fig. 4a

Fig. 4b

Fig. 5

Fig. 6a

| QoSEC index | DER range | $CSI_{max}$ at Eve | Sec. func. pool |
|---|---|---|---|
| 0 | $DER_0 < \cdot \leq 0.5$ | $CSI_{E,low}$ | SEC-pool-0 |
| 1 | $DER_1 < \cdot \leq DER_0$ | $CSI_{E,low\text{-}mid}$ | SEC-pool-1 |
| 2 | $DER_2 < \cdot \leq DER_1$ | $CSI_{E,mid}$ | SEC-pool-2 |
| 3 | $DER_3 < \cdot \leq DER_2$ | $CSI_{E,mid\text{-}high}$ | SEC-pool-3 |
| 4 | $0 < \cdot \leq DER_3$ | $CSI_{E,high}$ | SEC-pool-4 |

Fig. 6b

Fig. 7

# Cross-layer transceiver design

Fig. 8a

Fig. 8b

Fig. 9

**EUROPEAN SEARCH REPORT**

Europäisches
Patentamt
European
Patent Office
Office européen
des brevets

Application Number

EP 22 20 9986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRANK ANNA ET AL: "Implementation of a Modular Coding Scheme for Secure Communication", ICC 2022 - IEEE INTERNATIONAL CONFERENCE ON COMMUNICATIONS, IEEE, 16 May 2022 (2022-05-16), pages 2900-2905, XP034167576, DOI: 10.1109/ICC45855.2022.9839046 [retrieved on 2022-08-11] * sections II, V; figure 1 * | 1-20 | INV. H04K1/02 |
| X | ERIC KUBISCHTA ET AL: "Semantic Security on Wiretap Channels using Universal Hashing with Fading Applications", ARXIV.ORG, CORNELL UNIVERSITY LIBRARY, 201 OLIN LIBRARY CORNELL UNIVERSITY ITHACA, NY 14853, 21 March 2019 (2019-03-21), XP081156141, * sections I.B, III.A, III.B, III.F; figure 1 * | 1-20 | |
| A | SUN LI ET AL: "Physical layer security with its applications in 5G networks: A review", CHINA COMMUNICATIONS, CHINA INSTITUTE OF COMMUNICATIONS, PISCATAWAY, NJ, USA, vol. 14, no. 12, 1 December 2017 (2017-12-01), pages 1-14, XP011675557, ISSN: 1673-5447, DOI: 10.1109/CC.2017.8246328 [retrieved on 2018-01-03] * section IV * | 1-20 | TECHNICAL FIELDS SEARCHED (IPC) H04K H04L |

-/--

The present search report has been drawn up for all claims

| Place of search | Date of completion of the search | Examiner |
|---|---|---|
| Munich | 11 May 2023 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 22 20 9986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | MAHDI SHAKIBA-HERFEH ET AL: "Physical Layer Security: Authentication, Integrity and Confidentiality", ARXIV.ORG, CORNELL UNIVERSITY LIBRARY, 201 OLIN LIBRARY CORNELL UNIVERSITY ITHACA, NY 14853, 20 January 2020 (2020-01-20), XP081582371, * sections I, III, VI * ----- | | |

TECHNICAL FIELDS
SEARCHED (IPC)

The present search report has been drawn up for all claims

| Place of search | Date of completion of the search | Examiner |
|---|---|---|
| Munich | 11 May 2023 | Billet, Olivier |

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8667380 B2

**Non-patent literature cited in the description**

- **A. D. WYNER.** The wire-tap channel. *The Bell System Technical Journal,* October 1975, vol. 54 (8), 1355-1387
- **M. BLOCH ; M. HAYASHI ; A. THANGARAJ.** Error-Control Coding for Physical-Layer Secrecy. *Proceedings of the IEEE,* October 2015, vol. 103 (10), 1725-1746
- Semantic Security for the Wire-tap Channel. **M. BELLARE ; S. TESSARO ; A. VARDY.** Advances in Cryptology - CRYPTO 2012. Heidelberg: Springer, 2012, 294-311
- **M. HAYASHI ; R. MATSUMOTO.** Secure Multiplex Coding With Dependent and Non-Uniform Multiple Messages. *IEEE Transactions on Information Theory,* May 2016, vol. 62 (5), 2355-2409

- **M. WIESE ; H. BOCHE.** Mosaics of combinatorial designs for information-theoretic security. *Designs, Codes and Cryptography,* March 2022, vol. 90 (3), 593-632
- Semantic Security via Seeded Modular Coding Schemes and Ramanujan Graphs. *IEEE Transactions on Information Theory,* 2021, vol. 67 (1), 52-80
- **L. TORRES-FIGUEROA ; M. HÖRMANN ; M. WIESE ; U. J. MÖNICH ; H. BOCHE ; O. HOLSCHKE ; M. GEITZ.** Implementation of Physical Layer Security into 5G NR Systems and E2E Latency Assessment. *2022 IEEE Global Communications Conference (GLOBECOM),* 2022